# EUROPEAN PATENT SPECIFICATION

(11) **EP 3 113 906 B1**
(45) Date of publication and mention of the grant of the patent: **21.03.2018**
(21) Application number: 14833217.4
(22) Date of filing: 17.12.2014
(51) Int. Cl.: B23Q 1/62, B23Q 5/32, B23Q 5/36, B23Q 11/00, B23Q 1/44

(54) **MACHINE TOOL WITH ONBOARD MOTOR**
WERKZEUGMASCHINE MIT ON-BOARD MOTOR
MACHINE OUTIL AVEC MOTEUR ON-BOARD

(30) Priority: 04.03.2014 IT BS20140051
(43) Date of publication of application: 11.01.2017
(73) Proprietor: Innse-Berardi S.p.A., 25127 Brescia (IT)
(72) Inventor: CAMOZZI, Attilio, I-25127 Brescia (IT); CAMOZZI, Ettore, I-25127 Brescia (IT)
(74) Representative: Pulieri, Gianluca Antonio
(86) International application number: PCT/IB2014/067004
(87) International publication number: WO 2015/132638

(56) References cited:
- EP-A1- 1 820 600
- EP-A1- 2 664 413
- WO-A1-2006/105951

## Description

The present invention relates to the machine tools industry and in particular to machine tools of large dimensions. In particular, the object of the present invention is a rotation drive system of the spindle of the machine tool, in particular of a vertical upright machine tool such as a milling machine or a milling-boring machine. Such a machine tool is known e.g. from patent document EP 2 664 413, which forms the preamble of appended claim 1.

As is known, in order to position the spindle in the desired position with respect to a piece to be machined and then perform the desired machining, a vertical upright machine tool comprises a vertically translatable carriage on which a horizontally translatable ram is mounted, inside which the spindle is placed, horizontally translatable and rotatable around its rotation axis.

To allow such movements, the machine tool is generally provided with an electric motor for moving the carriage, an electric motor for moving the ram, situated on board the carriage, an electric motor for the translation of the spindle and an electric motor for the rotation of the spindle, placed on board the ram and connected to the spindle by means of a mechanical gearbox, which allows the spindle to rotate at the desired rotation speed.

Such solutions however have the disadvantage of the considerable weight of the components to be supported by the ram and the couplings between the gears subject to wear and which may lead to imprecise machining, vibrations and noise. Lastly, the assembly of the machine is time-consuming and requires skilled labour.

Solutions are also known of in which the electric motor for the rotation of the spindle is on board said spindle and the entire spindle-motor assembly is moved by a motor on board the ram. For example, such a solution is described in document WO-A1-2006/105951. However, this type of solutions has the drawback of placing a twisting couple on the spindle screw, reducing its useful life. It also has disadvantages caused by the need to adequately cool the motor connected to the spindle, increasing the overall size of the ram or limiting the size of the motor inside the ram.

The object of the present invention is to make a machine tool provided with a drive system of the spindle which overcomes the drawbacks mentioned with reference to the prior art.

Such purpose is achieved by a machine tool made according to claim 1. The dependent claims describe embodiment variants of the invention.

The characteristics and advantages of the machine tool according to the present invention will be evident from the description given below, by way of a nonlimiting example, according to the appended drawings, wherein:

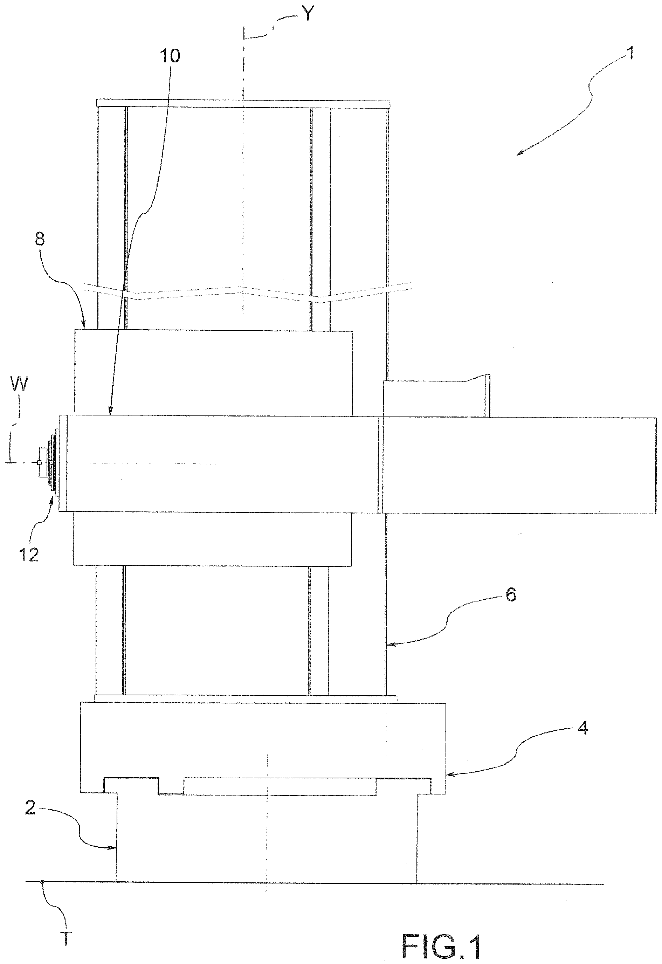

- figure 1 shows a schematic side view of a machine tool comprising a spindle drive system according to the present invention;

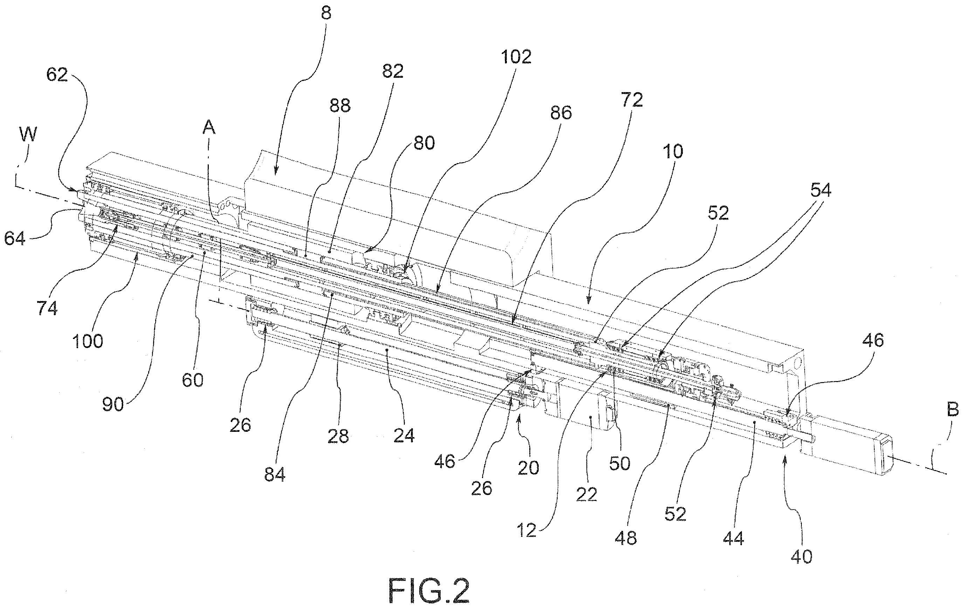

- figure 2 is a view partly in cross-section of the drive system according to the present invention, according to one embodiment, in a limit rearward configuration of the spindle;

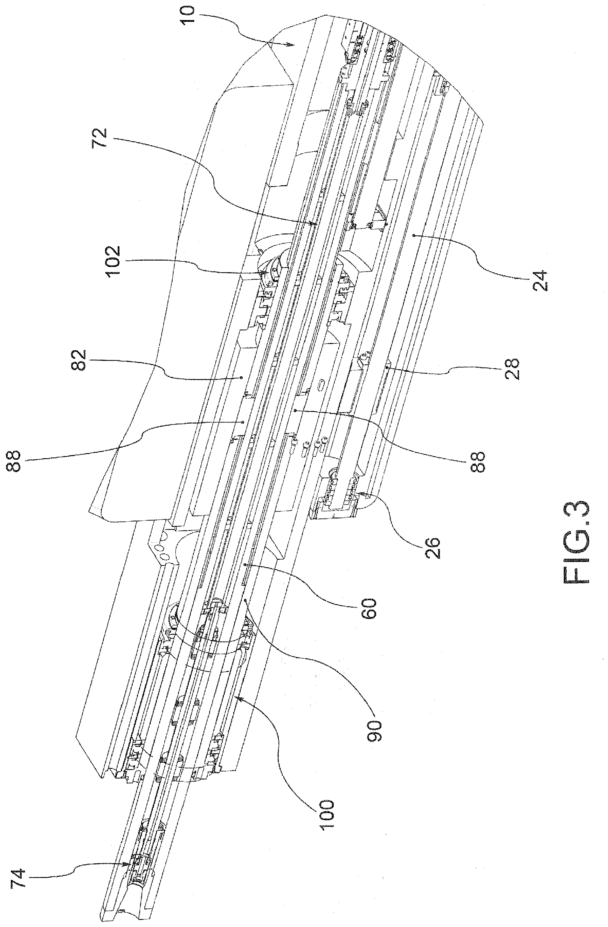

- figure 3 shows the drive system in figure 2, in an advanced configuration of the spindle; and
- figure 4 illustrates a cross-section view of a detail of the drive system of a machine tool according to the present invention, according to a further embodiment.

With reference to the appended drawings, reference numeral 1 globally denotes a machine tool, and in particular a large machine tool, such as boring-milling machine comprising a bench 2 having a main extension along a main axis.

The bench 2 is fixed and rests on foundations and the support surface determines a horizontal ground plane T.

The machine 1 further comprises an upright base 4, which surmounts the bench 2 and is supported by it, translatable in a controllable manner along the main axis of the bench 2.

The machine 1 further comprises an upright 6, attached to the upright base 4 and supported by it, having a main extension along a vertical axis Y, perpendicular to the ground plane T. The upright 6 preferably has a box-shaped structure and is delimited by a box side wall which extends along said vertical axis Y.

The machine 1 further comprises a carriage 8, supported by the upright 6, engaged with the side wall thereof, translatable in a controllable manner along the vertical axis Y.

The machine 1 further comprises a spindle-carrier ram 10, supported by the carriage 8, and a spindle 12 supported by the ram 10, rotatable around a working axis W, perpendicular to the vertical axis Y and the main axis of the bench, for the performance of machining.

The ram 10 is translatable in relation to the carriage 8 along the direction of said working axis W, in a controllable manner. The spindle, as well as being rotatable around the working axis W, is translatable in relation to the ram 10 in the direction of said working axis W.

In particular, the machine 1 comprises a ram translation group 20 placed on board the carriage 8, comprising a ram translation motor 22, electric and controllable in speed, such as a DC or asynchronous motor.

The ram translation motor 22 is preferably positioned with its rotation axis A parallel to the working axis W and offset therefrom, preferably downwards.

The ram translation group 20 further comprises a worm screw 24, which extends along the rotation axis A of the ram translation motor 22, supported by a pair of bearing groups 26, for example at the distal and proximal ends of said worm screw 24.

Moreover, the ram translation group 20 comprises a screw-nut element 28 which kinematically engages with the worm screw 24 so as to be subject to translation by rotation of said worm screw 24. The screw-nut element 28 is integral with the ram 10 so as to cause the translation thereof along the working axis W.

The machine 1 further comprises a spindle translation group 40, placed on board the ram 10, comprising a spindle translation motor 42, electric and controllable in speed, such as a DC or asynchronous motor.

The spindle translation motor 42 is preferably positioned with its rotation axis B parallel to the working axis W and offset from it, preferably downwards.

The spindle translation group 40 further comprises a worm screw 44, which extends along the rotation axis B of the spindle translation motor 42, supported by a pair of bearing groups 46, for example at the distal and proximal ends of said worm screw 44.

Moreover, the spindle translation group 40 comprises a screw-nut element 48 which kinematically engages with the worm screw 44 so as to be subject to translation by rotation of said worm screw 44. The screw-nut element 48 is integral in translation with the spindle 12 so as to cause the translation thereof along the working axis W, while uncoupled in rotation therefrom.

To such purpose, according to an exemplary embodiment, the spindle translation group 40 comprises a bushing 50 which extends along the working axis W, for example, coaxially thereto, to which the screw-nut element 48 is mechanically clamped and which in turn is constrained in translation to the spindle 12 in a two-directional manner, for example by means of flanges 52.

The spindle 12 is supported inside the bushing 50 by means of bearings 54.

The spindle 12 comprises an outer sleeve 60 which extends along the working axis W between a rear end and a front end 62, terminating with a front surface on which the main opening 64 for the insertion of the machine tool opens.

The spindle 12 further comprises retention means, for example hydraulically operated, operable to stably constrain the machine tool, inserted in the main opening 64, to the sleeve 60.

For example, the retention means comprise a duct 72, housed in the sleeve 60, to convey a pressurised fluid, such as oil, from the rear end of the spindle to the front end, in order to operate a retention mechanism 74 placed at the main opening 64.

The machine tool 1 further comprises at least one spindle rotation motor 80 positioned on board the ram 10.

the spindle rotation motor 80 comprises a stator 82 supported by the ram 10, attached thereto, which extends along the working W, coaxially to it. The stator 82 is axially crossed by the spindle 12.

Moreover, the spindle rotation motor 80 comprises a rotor 84, which extends along the working axis W, radially inwards of the stator 82, coaxially thereto.

The rotor 84 is engaged in rotation with the sleeve 60 of the spindle 12 and is uncoupled in axial translation from said sleeve 60.

To such purpose, for example, the sleeve 60 of the spindle 12 provides for at least one axial groove 86 and the spindle comprises at least one tab 88, attached to the rotor 84 and axially sliding in the respective axial groove 86 of the sleeve 60.

Preferably, moreover, the ram 10 comprises a shell 90, attached to the tabs 88, which encloses the sleeve 60 and is supported in rotation by a front support group 100 near the main opening 64.

At the same time the rotor 84 is supported in rotation by a rear support group 102, positioned axially externally to the stator 82, supported by the ram 10.

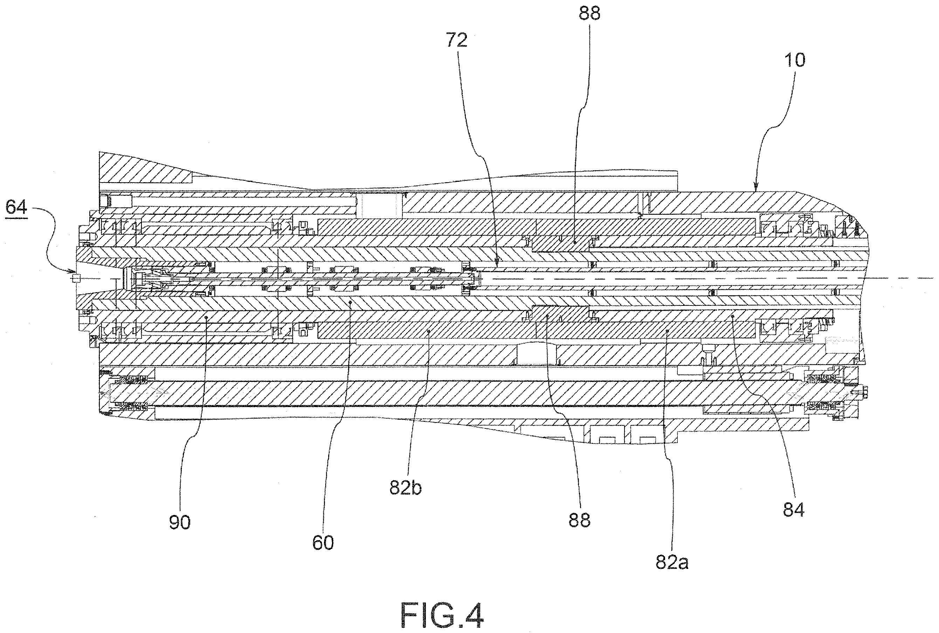

According to a further embodiment of the invention (figure 4), the spindle rotation motor 80 comprises a plurality of stators, for example two 82a, 82b, placed side by side axially, spaced apart or in contact with each other.

According to yet a further embodiment (not shown), the spindle rotation motor 80 comprises a plurality of rotors, for example two, placed side by side axially, spaced apart or in contact with each other.

During normal operation of the machine tool, for the positioning of the spindle 12, the upright 6 is positioned along the bench 2 for translation along the main axis thereof, the carriage is positioned at the desired height along the vertical axis V and the ram translation motor 22 is operable to translate the ram 10 along the working axis W.

For the performance of machining, the spindle translation motor 42 is operable to translate the spindle 12 (and thus the machine tool joined to it) along the working axis W and the spindle rotation motor 80 is operable to impart the rotation on the sleeve of the spindle 12 (and thus the machine tool joined to it).

During the translation of the sleeve 60, the rotor 82 of the spindle rotation motor 80 transmits the working couple to the sleeve 60 by virtue of the engagement in rotation of the tabs 88 with the sleeve 60, while said sleeve 60 translates relative to said rotor 82 by virtue of the sliding of the tabs 88 in the respective axial grooves 86.

Innovatively, the machine tool according to the present invention makes it possible to maintain high machining precision even after a continued use of said machine.

This is due, for example, to the elimination of the gears for the transmission of the twisting couple to the spindle, subject to wear and the cause of vibrations.

Advantageously, moreover, the ram has a reduced weight compared to the solutions of the prior art. This also helps to reduce inaccuracies, since the machine is subject to less deformation under its own weight.

According to a further advantageous aspect, the machine is simpler to assemble and thus has lower overall costs.

This is due, for example, to a reduced number of components.

It is clear that a person skilled in the art may make modifications to the machine tool described above, all contained within the scope of protection as defined by the following claims.

## Claims

1. Machine tool (1) comprising:
- an upright (6) having prevailing extension along a vertical axis (Y) perpendicular to a ground plane (T);
- a carriage (8), supported by the upright (6), translatable on command along the vertical axis (Y);
- a spindle-carrier ram (10), supported by the carriage (8) ;
- a spindle (12) supported by the ram (10), rotatable about a working axis (W), orthogonal to the vertical axis (Y) for the execution of machining operations, wherein the ram (10) is translatable on command with respect to the carriage (8) along the direction of said working axis (W), and said spindle (12) is translatable on command with respect to the ram (10) in the direction of said working axis (W);
**characterised in that** it further comprises
- at least one spindle rotation motor (80) arranged onboard of the ram (10), comprising at least one stator (82) supported by the ram (10), axially crossed by the spindle (12) and at least one rotor (84) arranged radially internally to the stator (82), engaged in rotation with the spindle (12) and uncoupled in axial translation relative to said spindle (12).

2. Machine tool according to claim 1, wherein the spindle (12) comprises an outer sleeve (60) having at least one axial groove (86) and the rotor (84) is attached to at least one tab (88) axially sliding in the respective axial groove (86) of the sleeve (60).

3. Machine tool according to claim 2, comprising a shell (90) which encloses at least a portion of the sleeve (60), attached to the tab (88) and supported in rotation by a front support group (100) in the vicinity of a main opening (64) for a working tool, said front support group (100) being in turn supported by the ram (10).

4. Machine tool according to claim 2 or 3, wherein the rotor (84) is supported in rotation by a rear support group (102), arranged axially externally to the stator (82), supported by the ram (10).

5. Machine tool according to any one of the preceding claims, wherein the spindle rotation motor (80) includes a plurality of stators (82a, 82b) positioned axially side by side.

6. Machine tool according to any one of the preceding claims, wherein the spindle rotation motor (80) includes a plurality of rotors positioned axially side by side.

7. Machine tool according to any one of the preceding claims, comprising a ram translation group (20), placed onboard of the carriage (8), comprising a ram translation motor (22), a worm screw (24) drivable in rotation by the ram translation motor (22), and a screw-nut element (28) which kinematically engages with the worm screw (24) so as to be subject to translation by rotation of said worm screw (24), said screw-nut element (28) being united with the ram (10) so as to cause the translation thereof along the working axis (W).

8. Machine tool according to any one of the preceding claims, comprising a spindle translation group (40), placed onboard of the ram (10), comprising a spindle translation motor (42), a worm screw (44) drivable in rotation by the spindle translation motor (42), and a screw-nut element (48) which kinematically engages with the worm screw (44) so as to be subject to translation by rotation of said worm screw (44), said screw-nut element (48) being united with the spindle (12) so as to cause the translation thereof along the working axis (W) and uncoupled in rotation by said spindle (12).

9. Machine tool according to any one of the preceding claims, wherein spindle 12 comprises hydraulic retaining means, operable for stably constraining a working tool.

## Patentansprüche

1. Werkzeugmaschine (1) umfassend:
- einen Pfosten (6) mit einer vorherrschenden Erstreckung entlang einer vertikalen Achse (Y) senkrecht zu einer Grundebene (T);
- einen Wagen bzw. Schlitten (8), der von dem Pfosten (6) gestützt bzw. getragen wird, wobei er auf Befehl entlang der vertikalen Achse (Y) translatierbar bzw. verschiebbar ist;
- einen Spindelträgerstößl (10), der durch den Schlitten (8) gestützt bzw. getragen ist;
- eine Spindel (12), die durch den Stößel (10) gestützt bzw. getragen ist, wobei sie um eine Arbeitsachse (W) orthogonal zu der vertikalen Achse (Y) zur Ausführung von Bearbeitungsvorgängen drehbar ist, wobei der Stößel (10) auf Befehl in Bezug auf den Schlitten (8) entlang der Richtung der Arbeitsachse (W) translatierbar bzw. verschiebbar ist und die Spindel (12) auf Befehl in Bezug auf den Stößel (10) in der Richtung der Arbeitsachse (W) translatierbar bzw. verschiebbar ist;
**dadurch gekennzeichnet, dass** sie ferner umfasst
- mindestens einen Spindeldrehmotor (80), der On-Board des bzw. an dem Stößel (10) angeordnet ist, umfassend mindestens einen Stator (82), der durch den Stößel (10) gestützt bzw. getragen ist, axial gekreuzt durch die Spindel (12) und mindestens einen Rotor (84), der radial innerhalb des Stators (82) angeordnet ist, in Dreheingriff mit der Spindel (12) ist und in axialer Translation relativ zu der Spindel (12) entkoppelt ist.

2. Werkzeugmaschine nach Anspruch 1, wobei die Spindel (12) eine äußere Hülse (60) mit mindestens einer axialen Nut (86) umfasst und der Rotor (84) an mindestens einem Fortsatz (88) angebracht ist, der axial in der jeweiligen axialen Nut (86) der Hülse (60) gleitet.

3. Werkzeugmaschine nach Anspruch 2, umfassend eine Hülle (90), die mindestens einen Abschnitt der Hülse (60) umschließt, angebracht an dem Fortsatz (88) und in Drehung durch eine vordere Stütz- bzw. Trägergruppe (100) in der Nähe einer Hauptöffnung (64) für ein Arbeitswerkzeug gestützt bzw. getragen, wobei die vordere Trägergruppe (100) durch den Stößel (10) getragen ist.

4. Werkzeugmaschine nach Anspruch 2 oder 3, wobei der Rotor (84) in Drehung durch eine hintere Stütz- bzw. Trägergruppe (102) gestützt bzw. getragen ist, axial außerhalb des Stators (82) angeordnet ist, durch den Stößel (10) gestützt bzw. getragen ist.

5. Werkzeugmaschine nach einem der vorhergehenden Ansprüche, wobei der Spindeldrehmotor (80) eine Mehrzahl von Statoren (82a, 82b) enthält, die axial Seite an Seite positioniert sind.

6. Werkzeugmaschine nach einem der vorhergehenden Ansprüche, wobei der Spindeldrehmotor (80) eine Mehrzahl von Rotoren aufweist, die axial Seite an Seite positioniert sind.

7. Werkzeugmaschine nach einem der vorhergehenden Ansprüche, umfassend Stößeltranslationsgruppe (20), die On-Board des bzw. an dem Schlitten (8) platziert ist, umfassend einen Stößeltranslationsmotor (22), eine Schneckenschraube (24), die in Drehung durch den Stößeltranslationsmotor (22) antreibbar ist, und ein Schraube-Mutter-Element (28), das kinematisch mit der Schneckenschraube (24) in Eingriff kommt bzw. steht, um einer Translation durch Drehung der Schneckenschraube (24) unterzogen zu werden, wobei das Schraube-Mutter-Element (28) mit dem Stößel (10) verbunden ist bzw. wird, um dessen Translation entlang der Arbeitsachse (W) zu bewirken.

8. Werkzeugmaschine nach einem der vorhergehenden Ansprüche, umfassend eine Spindeltranslationsgruppe (40), die On-Board des bzw. an dem Stößel (10) platziert ist, umfassend einen Spindeltranslationsmotor (42), eine Schneckenschraube (44), die in Drehung durch den Spindeltranslationsmotor (42) antreibbar ist, und ein Schraube-Mutter-Element (48), das kinematisch mit der Schneckenschraube (44) in Eingriff kommt bzw. steht, um einer Translation durch Drehung der Schneckenschraube (24) unterzogen zu werden, wobei das Schraube-Mutter-Element (48) mit der Spindel (12) verbunden ist bzw. wird, um dessen Translation entlang der Arbeitsachse (W) zu bewirken, und in Drehung durch die Spindel (12) entkoppelt ist bzw. wird.

9. Werkzeugmaschine nach einem der vorhergehenden Ansprüche, wobei die Spindel (12) hydraulische Rückhaltemittel aufweist, die zum stabilen Einzwingen bzw. Halten eines Arbeitswerkzeugs operabel bzw. betätigbar sind.

## Revendications

1. Machine-outil (1) comprenant :
- un montant (6) ayant une extension prédominante le long d'un axe vertical (Y) perpendiculaire à un plan de sol (T) ;
- un chariot (8), supporté par le montant (6), pouvant effectuer une translation sur commande le long de l'axe vertical (Y) ;
- un vérin porte-broche (10), supporté par le chariot (8) ;
- une broche (12) supportée par le vérin (10), pouvant tourner autour d'un axe de travail (W), orthogonal à l'axe vertical (Y) pour l'exécution d'opérations d'usinage, dans lequel le vérin (10) peut effectuer une translation sur commande par rapport au chariot (8) le long de la direction dudit axe de travail (W), et ladite broche (12) peut effectuer une translation sur commande par rapport au vérin (10) dans la direction dudit axe de travail (W) ;
**caractérisée en ce qu'**elle comprend en outre
- au moins un moteur de rotation de broche (80) agencé à bord du vérin (10), comprenant au moins un stator (82) supporté par le vérin (10), traversé axialement par la broche (12) et au moins un rotor (84) agencé radialement vers l'intérieur du stator (82), mis en prise en rotation avec la broche (12) et désaccouplé en translation axiale par rapport à ladite broche (12).

2. Machine-outil selon la revendication 1, dans laquelle la broche (12) comprend un manchon externe (60) ayant au moins une gorge axiale (86) et le rotor (84) est fixé à au moins une languette (88) coulissant axialement dans la gorge axiale respective (86) du manchon (60).

3. Machine-outil selon la revendication 2, comprenant une coque (90) qui enferme au moins une partie du manchon (60), fixée à la languette (88) et supportée en rotation par un groupe de support avant (100) à proximité d'une ouverture principale (64) d'un outil de travail, ledit groupe de support avant (100) étant à son tour supporté par le vérin (10).

4. Machine-outil selon la revendication 2 ou 3, dans laquelle le rotor (84) est supporté en rotation par un groupe de support arrière (102), agencé axialement vers l'extérieur du stator (82), supporté par le vérin (10).

5. Machine-outil selon l'une quelconque des revendications précédentes, dans laquelle le moteur de rotation de broche (80) comporte une pluralité de stators (82a, 82b) positionnés axialement côte à côte.

6. Machine-outil selon l'une quelconque des revendications précédentes, dans laquelle le moteur de rotation de broche (80) comporte une pluralité de rotors positionnés axialement côte à côte.

7. Machine-outil selon l'une quelconque des revendications précédentes, comprenant un groupe de translation de vérin (20), placé à bord du chariot (8), comprenant un moteur de translation de vérin (22), une vis sans fin (24) pouvant être entraînée en rotation par le moteur de translation de vérin (22), et un élément vis-écrou (28) qui se met en prise cinématiquement avec la vis sans fin (24) de sorte à être soumis à une translation par rotation de ladite vis sans fin (24), ledit élément vis-écrou (28) étant associé au vérin (10) de sorte à provoquer sa translation le long de l'axe de travail (W).

8. Machine-outil selon l'une quelconque des revendications précédentes, comprenant un groupe de translation de broche (40), placé à bord du vérin (10), comprenant un moteur de translation de broche (42), une vis sans fin (44) pouvant être entraînée en rotation par le moteur de translation de broche (42), et un élément vis-écrou (48) qui se met en prise cinématiquement avec la vis sans fin (44) de sorte à être soumis à la translation par rotation de ladite vis sans fin (44), ledit élément vis-écrou (48) étant associé à la broche (12) de sorte à provoquer sa translation le long de l'axe de travail (W) et désaccouplé en rotation par ladite broche (12).

9. Machine-outil selon l'une quelconque des revendications précédentes, dans laquelle la broche (12) comprend des moyens de retenue hydrauliques, utilisables pour contraindre de façon stable un outil de travail.
